# EUROPEAN PATENT APPLICATION

(11) **EP 3 205 635 A1**
(43) Date of publication of application: **16.08.2017**
(21) Application number: 17155765.5
(22) Date of filing: 13.02.2017
(51) Int. Cl.: C04B 41/71, C09D 191/00, C04B 41/47, C04B 41/62

(54) **METHOD OF PROTECTING AND PRESERVING CONCRETE OBJECTS**

(30) Priority: 11.02.2016 SE 1650178
(71) Applicant: Irvang, Per-Erik, 755 95 Uppsala (SE)
(72) Inventor: Irvang, Per-Erik, 755 95 Uppsala (SE)
(74) Representative: Brann AB

(57) **Abstract**

The present invention generally relates to protection and preservation of concrete objects, such as construction elements, which are exposed to weathering by rain, salt water, wind, freeze-thaw cycles as well as to applied chemicals and de-icing agents, and more particularly to a method of protecting such concrete objects from spalling using raw cold-pressed linseed oil, as well as a concrete object treated with raw cold-pressed linseed oil.

## Description

### Field of the invention

The present invention generally relates to protection and preservation of concrete objects, such as construction elements, which are exposed to aggressive environmental impact such as weathering by rain, salt water, wind, freeze-thaw cycles as well as applied chemicals and de-icing agents, and more particularly to a method of protecting such concrete objects from spalling using raw cold-pressed linseed oil, as well as a concrete object treated with cold-pressed linseed oil.

### Background of the invention

Concrete objects exposed to aggressive environmental impact, such as weathering by rain, salt water, wind, freeze-thaw cycles as well as to applied chemicals and de-icing agents may tend to crack after some time of exposure. This is principally due to water penetrating into the concrete from a surface, e.g. from a surface exposed to weathering. The deteriorative process is generally referred to as spalling of the concrete. Often concrete objects, such as concrete building elements or concrete constructional elements are reinforced, such as by metallic means of reinforcement, e.g. reinforcement bars. Such reinforcement embedded in the concrete may be prone to corrode upon access of water to the reinforcement. Accordingly, entry of water through cracks in the concrete to the reinforcement may be fatal to the mechanical strength of the concrete object, especially when acids or salts are contained in the water reaching to the reinforcement.

In order to prevent spalling of concrete surfaces, film forming compositions have been applied to the exposed concrete surfaces.

US 3 228 777 describes a linseed-oil-in-water emulsion for curing and/or preventing spalling of concrete that within a few hours of application to the surface very rapidly crosslink and dry, thereby forming continuous films or membranes.

WO 2007/051302 discloses high linolenic linseed oil compositions which may be used e.g. as an anti-spalling surface concrete preservative. Example 7 therein describes synthesizing such preservative by blending 30% high linolenic acid medium oil alkyd as prepared therein with 20% high alpha linolenic acid flax (linseed) oil and 50% mineral spirits. The high alpha linolenic acid flax (linseed) oil with 65% or greater alpha linolenic acid content used therein is said to improve upon existing concrete preservatives by forming a stronger, more solvent resistant, more weather resistant film because of the additional crosslinking due to the higher alpha linolenic acid content in high alpha linolenic acid flax (linseed) oil.

The present inventor has found concrete protective compositions of the prior art, such as the above film-forming compositions, to offer a protection which tends to crack, peel off, or being worn off. It is therefore desirable to provide a more durable concrete protection.

### Summary of the invention

According to the present invention an improved protection and preservation of concrete objects is obtained, wherein raw, cold-pressed linseed oil is applied to a concrete surface of the object.

The primary aim of the invention is to protect and/or preserve a concrete object from spalling.

Accordingly, in one aspect the invention relates to a method of treating a concrete object, comprising the steps of: providing raw cold-pressed linseed oil; and, applying the raw cold-pressed linseed oil to a concrete surface of the concrete object.

In another aspect the invention relates to a concrete object exhibiting a surface layer of concrete, into which surface layer raw cold-pressed linseed oil has penetrated.

In yet another aspect the present invention relates to the use of raw, cold-pressed linseed for protecting and preserving concrete objects.

The invention provides a simple and environmentally friendly method of protecting concrete objects.

As used herein the term "raw cold-pressed linseed oil" refers to raw cold-pressed linseed oil which has not been subjected to a temperature of over 70°C, neither during its preparation nor at a later stage.

### Detailed description of the invention and preferred embodiments thereof

The present inventor has found that raw cold-pressed linseed oil will penetrate readily into concrete, such as into a depth of 2-7 mm from the outer surface to which the oil is applied. Upon drying of the outer layer of the oil by exposure thereof to atmospheric oxygen, the dried oil in the outer layer of the concrete will form a barrier stopping water, and other substances, such as e.g. salts and acids which are detrimental to the concrete and any reinforcement therein, from entering into the concrete.

Raw cold-pressed linseed oil is a drying oil. The drying thereof is however substantially slower than e.g. the drying of boiled linseed oil. The drying time of raw cold-pressed linseed oil is about 14 days.

It is believed that the protective layer nevertheless will be breathable, i.e. will let water vapour out from the underlying inner concrete while stopping water from entering into the concrete from the outside.

The depth of penetration of the raw, cold-pressed linseed oil is believed to be due to a combination of relatively short molecular chain lengths, and the long drying time of the raw, cold-pressed linseed oil.

As the outer layer of the oil eventually dries, it will restrict entry of oxygen through the dried oil into the underlying concrete. The drying of the outer layer of oil will inhibit further oxidation of oil in underlying concrete. Accordingly, in the underlying layer of the concrete the oil may remain non-dried for a longer time, and can thus penetrate further into the underlying concrete.

Should the outermost layer of the concrete be damaged or worn down, non-dried oil in the underlying concrete may thereby be exposed to atmospheric oxygen and dry, thereby restoring or maintaining a layer of dried oil in the outermost layer of the concrete.

Since the protective layer due to the penetration of oil will be formed *in* the outer layer of the concrete, rather than *on* the outer layer of concrete, the protective layer will not be amenable to wear and to being peeled off.

No drying agents or siccatives may be used with the oil according to the invention. Also, no other linseed oil grades than raw cold-pressed linseed oil may be used according to the invention.

According to the inventive method raw cold-pressed linseed oil is applied to a concrete surface. It is preferred to use the raw cold-pressed linseed oil without any additives or diluents. Application of the oil is preferably carried out such that a sufficient amount of oil is applied so as to cover and saturate the surface. In practice, depending on the extent of surface porosity of the concrete, an additional application may be required within a few hours in order to saturate the surface. Thereafter, application is preferably repeated 1 or 2 times. The second application can preferably be performed usually within about 3-14 days after the first application, depending on the weather and temperature, and a third application can suitably be carried out about 3-14 days after the second application, again depending on the weather and temperature. Each consecutive application of raw cold-pressed linseed oil should be carried out before drying of the surface of the previously applied layer of raw cold-pressed linseed oil. The extent of drying of the applied oil can easily be established by the person skilled in the art. The surface of a layer of raw cold-pressed linseed oil is dry when it feels dry to the touch. Accordingly, a consecutive layer should be applied while the surface still feels sticky or wet to the touch, and most preferably wet to the touch. The means of application of the oil to the concrete is not critical.

Drying of the raw cold-pressed linseed oil is achieved by subjecting the concrete surface, to which surface raw cold-pressed linseed oil has been applied, to oxygen, e.g. atmospheric oxygen, such as by exposure of the concrete surface to ambient air.

The concrete surface to be treated should preferably be dry. If the surface is wet, water on the surface may first be blown off using warm air. Preferably the surface layer of the wet concrete surface is dried down to a depth of about 1-2 cm.

However, since the protective layer will let water vapour out from the underlying inner concrete while stopping water from entering into the concrete, any humidity remaining in the concrete will be transported out from the concrete. It is thus believed that some humidity on the concrete surface and/or in the concrete surface layer can be tolerated according to the invention, although not preferred.

It is preferred to use the raw cold-pressed linseed oil without any additives or diluents. However, if desired, e.g. due to a low ambient temperature and/or due to low temperature of the concrete surface in instances where the surface cannot be heated to a suitable application temperature, the raw cold-pressed linseed oil may be diluted with a suitable diluent. Turpentine, e.g. gum or wood turpentine, is preferably used to dilute raw cold-pressed linseed oil.

In order to prevent fouling of the concrete surface to be protected, such as by overgrowth with organisms utilizing the linseed oil as nutrition, tar, preferably wood tar, can be added to the linseed oil and be admixed therewith. The tar-containing linseed oil can then be applied to the concrete surface upon which fouling is to be prevented. In order to enhance penetration of the tar, turpentine can be used to dilute the tar. A suitable composition for preventing fouling may thus consist of raw cold-pressed linseed oil, tar, and turpentine. A suitable mixing ratio is about one third of each one of the three components, i.e. of tar, turpentine and raw cold-pressed linseed oil. The tar-containing raw cold-pressed linseed oil, optionally containing turpentine, can suitably be applied as the outermost layer to the concrete surface to be protected in order to prevent fouling of said surface. Tar will impair the penetration of the raw cold-pressed linseed oil and should therefore be avoided in the first application of raw cold-pressed linseed oil to the concrete surface to be treated. Examples of concrete objects that can be protected by means of the invention are concrete objects having a surface exposed aggressive environmental impact, such as to salt water, water, freeze-and-thaw cycles, humidity, or salt etc., such as concrete construction elements of bridges, e.g. concrete edge beams, concrete building elements of parking garages, and concrete building elements, such as water conduits, in sewage treatment plants, and power plants using salt water for cooling water, as well as concrete building elements in hydroelectric dams.

It is also believed that the raw cold-pressed linseed oil will serve to protect oxidized iron metal objects from further oxidation by penetrating into underlying non-oxidized iron where it will form a durable surface layer.

Accordingly, raw cold-pressed linseed oil linseed may also be applied to a surface of an oxidized iron object extending from the concrete surface to be protected, such as an oxidized surface of a bridge railing or bridge rail.

## Claims

1. A method of treating a concrete object, comprising the steps of:
- providing raw cold-pressed linseed oil; and,
- applying the raw cold-pressed linseed oil to a concrete surface of a concrete object.

2. The method of claim 1, wherein the application step is repeated at least once.

3. The method of claim 1 or 2, wherein the application step is repeated twice.

4. The method of any one of the preceding claims, comprising the additional subsequent step of applying a mixture of raw cold-pressed linseed oil and tar, or a mixture of raw cold-pressed linseed oil, tar, and turpentine to a concrete surface, to which surface raw cold-pressed linseed oil has been applied in a preceding step.

5. The method of any one of the preceding claims, wherein raw cold-pressed linseed oil also is applied to a surface of an oxidized iron object extending from the concrete surface to be protected.

6. A concrete object obtainable by the method of claim 1, exhibiting a surface layer of concrete, into which surface layer raw cold-pressed linseed oil has penetrated.

7. The concrete object of claim 6, wherein the raw cold-pressed linseed oil has penetrated at least 2 mm into the concrete from the surface thereof to which surface the raw cold-pressed linseed oil has been applied.

8. Use of raw cold-pressed linseed oil for protecting and/or preserving a concrete object from spalling.
